# EUROPÄISCHE PATENTSCHRIFT

(11) **EP 1 473 973 B1**
(45) Veröffentlichungstag und Bekanntmachung des Hinweises auf die Patenterteilung: **09.08.2006**
(21) Anmeldenummer: 04009185.2
(22) Anmeldetag: 17.04.2004
(51) Int. Cl.: H05B 33/28, B32B 27/18

(54) **Metallisiertes, elektrolumineszentes Kunststoff-Formteil**
Metallised, electroluminescent formed plastic article
Pièce moulée, electroluminescente et metallisée

(30) Priorität: 30.04.2003 DE 10319392
(43) Veröffentlichungstag der Anmeldung: 03.11.2004
(73) Patentinhaber: Bayer MaterialScience AG, 51368 Leverkusen (DE)
(72) Erfinder: Opelka, Gerhard, Dr., 51381 Leverkusen (DE); Foltin, Eckard, 53489 Sinzig (DE); Tziovaras, Georgios, 42275 Wuppertal (DE); Künzel, Roland, 51381 Leverkusen (DE)

(56) Entgegenhaltungen:
- DE-A- 4 126 051
- DE-A- 4 208 044
- JP-A- 2000 348 870
- US-A- 3 497 750
- US-A1- 2002 037 432

## Beschreibung

Die Erfindung betrifft ein metallisiertes Kunststoff-Formteil, welches in der Durchlichttechnik eingesetzt wird.

Kunststoff-Formteile, welche zusätzlich zu einer Dekorschicht einen metallischen Glanz aufweisen, werden beispielsweise durch chemogalvanische Metallisierung von Formteilen aus thermoplastischem Kunststoff, z.B. Acrylnitril-Butadien-Styrol (ABS), Polyamid (PA), hergestellt. Die Dicke der Metallschicht liegt dabei in der Größenordnung von einigen µm, weshalb die Metallschicht nicht transparent ist und nachträglich nicht mehr verformt werden kann. Aufgrund der fehlenden Transparenz kann bei diesen Formteilen die Durchlichttechnik nicht angewendet werden.

Außerdem sind Kunststoff-Formteile bekannt, die durch Aufdampfen der Metallschicht im Hochvakuum beispielsweise mittels Physical Vapor Deposition (PVD) oder Chemical Vapor Deposition (CVD) hergestellt werden. Diese Metallschichten mit einer Dicke in der Größenordnung von einigen nm erlauben aufgrund ihrer Transparenz zwar die Anwendung der Durchlichttechnik, jedoch nur mit Hilfe von zusätzlichen Leuchtmitteln wie Leuchtdioden oder Glühlampen. Für das Anbringen dieser Leuchtmittel ist zusätzlicher Bauraum nötig. Außerdem erzeugen diese Leuchtmittel während des Betriebs erhebliche Wärme.

Andererseits sind Kunststoff-Formteile mit einer elektrolumineszenten Schicht auf einer transparenten Folie aus thermoplastischem Kunststoff, z.B. Polyethylenterephthalat (PET), bekannt. Dabei wird beispielsweise Indium-Zinnoxid (ITO) als transparente Elektrode eingesetzt. Diese Kunststoff-Folien weisen zwar eine homogene Beleuchtung über die Fläche ohne Erzeugung von Hitze auf, können aber nicht hinterspritzt werden. Diesen Formteilen fehlt eine metallisch glänzende Oberfläche.

JP 2000 348870 A offenbart ein elektrolumineszentes Anzeige-Schichtsystem aus einer metallisierten Polyethylenterephthalatfolie und einer elektrolumineszenten Schicht. Zwei Kontakte sorgen für die elektrische Anbindung. Zusätzlich weist das System eine isolierende Schicht und eine Rückschicht auf.

In DE 4208044 Al wird ein elektroluminezenter Leuchtstreifen beschrieben, wobei ein Elektroluminezenz-Leuchtelement aus einer metallisierten Folie, einer elektrisch leitenden Schicht, einer elektrolumineszenten Schicht, einem dielektrischen Überzug und einer Aluminiumfolie in einem feuchtigkeitsundurchlässigen Material verkapselt ist.

Die Aufgabe der vorliegenden Erfindung liegt darin, dreidimensionale metallisierte Kunststoff-Formteile mit flächiger Beleuchtung bereitzustellen. Die Kunststoff-Formteile sollen verformbar sein und mit thermoplastischem Kunststoff hinterspritzt werden können. Bei ausreichender Helligkeit, z.B. bei Tageslicht, soll der metallisch glänzende Effekt hervortreten, während bei Dunkelheit der Leuchteffekt einer elektrolumineszenten Verbindung durch die metallische Schicht hindurchtreten soll.

Gegenstand der Erfindung ist ein metallisiertes Kunststoff-Formteil, welches wenigstens folgenden Schichtenaufbau aufweist:
- wenigstens eine Schicht aus transparentem thermoplastischem Kunststoff (1) mit einer Dicke von 50 bis 3000 µm
- wenigstens eine Schicht aus Metall (2) der Dicke 5 bis 250 nm, wobei das Metall aus der Gruppe bestehend aus Chrom, Titan, Molybdän, Aluminium, Kupfer, Gold, Iridium und Indium ausgewählt ist
- wenigstens eine Schicht aus einer oder mehreren elektrolumineszenten Verbindungen
- zwischen der Schicht aus Metall (2) und der Schicht aus einer oder mehreren elektrolumineszenten Verbindungen (3) zusätzlich wenigstens eine Schicht eines oder mehrerer elektrisch leitender Kunststoffe.

Die Metallschicht mit einer Dicke von 5 bis 250 nm, vorzugsweise von 15 bis 60 nm, verleiht dem Kunststoff-Formteil einerseits einen metallischen Glanz, andererseits ist sie lichtdurchlässig. Somit können bei dem erfindungsgemäßen Kunststoff-Formteil Durchlichteffekte angewendet werden. Zusätzlich übernimmt die Metallschicht die Funktion des elektrischen Kontaktes für die elektrolumineszente Schicht.

Bevorzugte Metalle besitzen eine hohe elektrische Leitfähigkeit sowie einen starken metallischen Glanz.

Die Metallschicht wird beispielsweise mit Hilfe von Physical Vapor Deposition (PVD) oder Chemical Vapor Deposition (CVD) oder einer geeigneten Kombination dieser Verfahren auf den thermoplastischen Kunststoff aufgebracht.

Vorzugsweise weist die Schicht aus einem transparenten thermoplastischen Kunststoff eine Dicke von 175 bis 750 µm auf. Die Kunststoffschicht ist gegebenenfalls dekoriert und/oder gefärbt.

Bevorzugte thermoplastische Kunststoffe sind Polycarbonat (PC), Polyethylenterephthalat (PET), Styrol-Acrylnitril (SAN), Acrylnitril-Ethylen-Propylendien-Styrol (AES), Acrylnitril-Styrol-Acrylat (ASA), transparentes Acrylnitril-Butadien-Styrol (ABS), Polymethylmethacrylat (PMMA), Polystryrol (PS), Polyamid (PA), insbesondere PA 11, PA 12, Cycloolefin Copolymer (COC), Celluloseester, thermoplastisches Polyurethan (TPU), thermoplastisches Elastomer (TPE).

Die transparente thermoplastische Kunststoff-Schicht kann gefärbt und/oder dekoriert sein. Sie kann vor oder nach dem Aufbringen der Metallschicht, z.B. durch Hochdruck-Umformen (High Pressure Forming) oder Warmformung, verformt werden.

Die Transmission der Metallschicht zusammen mit der thermoplastischen Kunststoff-Schicht beträgt im sichtbaren Wellenlängenbereich von 400 bis 700 nm mehr als 20 %.

Als elektrolumineszente Verbindung kann beispielsweise Zinksulfid, welches mit Silber oder Kupfer dotiert ist, eingesetzt werden. Derartige elektrolumineszente Verbindungen sind kommerziell erhältlich, z.B. Fa. Lumitec AG, Schweiz.

Die elektrolumineszente Schicht kann vollflächig oder teilflächig, beispielsweise nach einem bestimmten Muster, z.B. mit Hilfe des Siebdruckverfahrens, aufgebracht sein.

Vorzugsweise weist die Schicht aus Metall und die Schicht aus einer oder mehreren elektrolumineszenten Verbindungen je einen elektrischen Kontakt auf.

Die Schicht aus einem elektrisch leitfähigen Kunststoff übernimmt oder verstärkt die Funktion des elektrischen Kontakts der Metallschicht und verbessert das Verformungsverhalten.

Die Schichtdicke des elektrisch leitfähigen Kunststoffs beträgt bevorzugt von 1 bis 20 µm. Beispiele für elektrisch leitfähige Kunststoffe, die in dem erfindungsgemäßen Kunststoff-Formteil Anwendung finden können, sind: Poly-3,4-Ethylendioxytiophen (PEDOT), Polyanilin, elektrisch leitfähige Lacksysteme. Sie zeichnen sich durch hohe Transmission von Licht, insbesondere 70 bis 95 %, bei guter elektrischer Leitfähigkeit, bevorzugt mit einem spezifischen elektrischen Widerstand kleiner als 10⁴ Ω·cm aus.

Außerdem kann zusätzlich wenigstens eine Schicht aus einem transparenten Kunststoff, z.B. Polycarbonat, und/oder einem transparenten Lack zwischen der metallisierten Schicht und der elektrolumineszenten Schicht eingebracht werden, um den Vollglanzeffekt der Metallschicht aufrecht zu erhalten.

Darüber hinaus kann gegebenenfalls auf der Schicht aus einer oder mehreren elektrolumineszenten Verbindungen zusätzlich eine Schutzschicht aus thermoplastischem Kunststoff und/oder Klebstoff und/oder Lack aufgebracht sein. Der thermoplastische Kunststoff kann beispielsweise hinterspritzt sein. Die Schutzschicht befindet sich auf der der metallischen Schicht abgewandten Seite der elektrolumineszenten Schicht.

Folgende thermoplastische Kunststoffe werden bevorzugt zum Hinterspritzen der Schutzschicht angewandt: ungefüllte oder mit Verstärkungs- und/oder Füllstoffen versehene thermoplastische Kunststoffe wie Polycarbonat, Acrylnitril-Butadien-Styrol (ABS), Styrol-Acrylnitril (SAN), Polybutylenterephthalat (PBT), Polyamid (PA), thermoplastisches Polyurethan (TPU), Polyethylenterephthalat (PET), Polystyrol (PS), Polyoxymethylen (POM), Polyolefine, z.B. Polyethylen (PE), Polypropylen (PP), Polyester, Polymethylmethacrylat (PMMA), elastomermodifizierte Blends, thermoplastisches PVC oder Mischungen solcher thermoplastischer Kunststoffe.

Als Klebstoff kann z.B. ein lösemittelfreier Kleber auf Basis von Polyurethan (PUR), insbesondere von Einkomponenten-PUR, eingesetzt werden. Lacke sind flüssige, pastöse oder pulverförmige Beschichtungsstoffe, die eine deckende Beschichtung mit schützenden, dekorativen u.a. Eigenschaften ergeben.

Als Schutzschicht für die erfindungsgemäßen metallisierten Kunststoff-Formteile können auch Lacksysteme beispielsweise auf Basis von hochwärmeformbeständiger Kunststoffe, z.B. PC, HAT-PC, Polyethylenterephthalat (PET), Polybutylenterephthalat (PBT), oder Polyurethan-Lacksysteme oder Noriphan® (Lösung von synthetischen Kunstharzen in organischen Lösungsmitteln, Firma Pröll, Deutschland) verwendet werden.

Die Schutzschicht schützt die Metallschicht und die elektrolumineszente Schicht vor mechanischen und/oder chemischen Einwirkungen und verbessert die Hafteigenschaften des Trägerelements.

Das erfindungsgemäße metallisierte Kunststoff-Formteil kann auf einem Trägerelement aufgebracht sein. Das Trägerelement kann z.B. ein Formteil aus einem thermoplastischen Kunststoff, z.B. PUR, sein. Es kann beispielsweise zur Verstärkung, Montage oder als konstruktives Element dienen. Es wird beispielsweise im Spritzgießverfahren oder mit Hilfe eines Klebstoffs aufgebracht. Dabei kommt der Schutzschicht eine weitere schützende Funktion zu: Sie verhindert Auswaschungen beim Anspritzen des Kunststoffs, welche aufgrund der verhältnismäßig hohen Temperaturen von größer als 180°C und hohen Drücken von größer als 200 bar auftreten.

Ein Vorteil der Erfindung liegt darin, dass der metallische Glanz eines metallisierten Kunststoff-Formteils mit einer flächigen Beleuchtung kombiniert wird. Durch die flächige Beleuchtung mittels elektrolumineszenter Verbindungen können komplexe dreidimensionale Geometrien gleichmäßig ausgeleuchtet werden. Leuchtet die elektrolumineszente Schicht, entsteht keine Wärme. Da keine zusätzlichen Leuchtmittel eingesetzt werden müssen, die Bauraum benötigen, können sehr flache metallisierte Kunststoff-Formteile hergestellt werden. Außerdem ist es von Vorteil, dass nachdem die einzelnen Schichten nacheinander aufgebracht worden sind, das fertige Formteil umgeformt werden kann, beispielsweise mittels High Pressure Forming gemäß EP 0 371 425. Ferner bildet der Schichtenaufbau des erfindungsgemäßen metallisierten Kunststoff-Formteils ein isoliertes, wasserdichtes System.

Das erfindungsgemäße metallisierte Kunststoff-Formteil kann beispielsweise im Kraftfahrzeugbau eingesetzt werden.

Nachfolgend wird die Erfindung anhand der beigefügten Zeichnung näher erläutert.

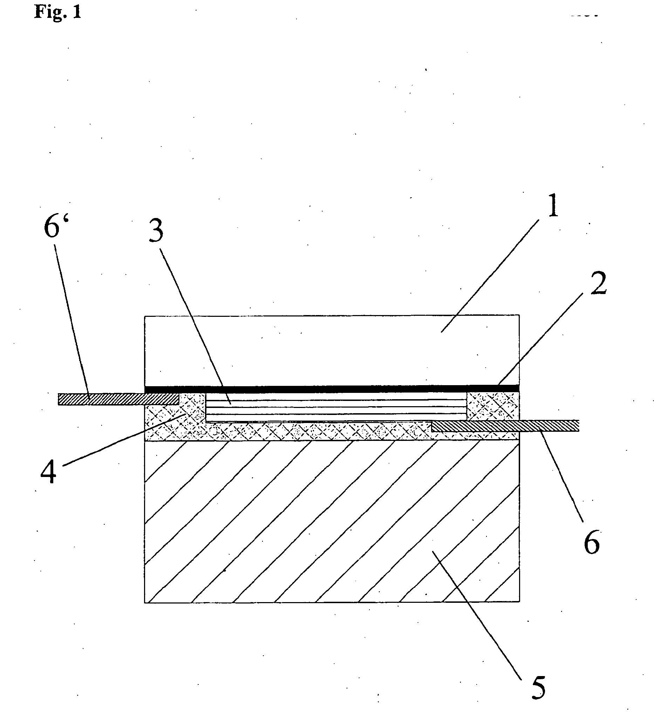

Figur 1 zeigt einen bevorzugten Schichtenaufbau des erfindungsgemäßen metallisierten Kunststoff-Formteils. Eine Folie aus thermoplastischem Kunststoff 1 wird auf einer Seite mit einer dünnen Metallschicht 2 versehen, welche lichtdurchlässig ist. Auf die metallische Schicht wird eine Schicht aus einer oder mehreren elektrolumineszenten Verbindungen 3 aufgebracht. Die Metallschicht 2 einerseits und die elektrolumineszente Schicht 3 andererseits sind mit einem elektrischen Kontakt 6 bzw. 6' versehen. Die elektrolumineszente Schicht 3 wird mit einer Schutzschicht 4 versehen. Ist die elektrolumineszente Schicht 3 nicht vollflächig, sondern teilflächig als Muster, wie in Fig. 1 dargestellt, aufgetragen, so bedeckt die Schutzschicht 4 die metallische Schicht 2, in den Bereichen, in denen die metallische Schicht nicht mit einer elektrolumineszenten Schicht 3 versehen ist. Neben dem Schutz der elektrolumineszenten Schicht 3 gleicht die Schutzschicht 4 dadurch außerdem die unterschiedliche Dicke des Kunststoff-Formteils aus. Schließlich ist dieses in Schichten aufgebaute metallisierte Kunststoff-Formteil auf ein Trägerelement 5 aufgebracht.

### Beispiele:

### Beispiel 1

Eine transparente PC-Folie 1 (Makrofol®, Fa. Bayer AG, Deutschland) mit 250 µm Dicke wurde mittels plasmagestützter Volumenbeschichtung mit einer 50 nm dicken Schicht aus Chrom 2 und anschließend partiell mit einer Schicht aus einer elektrolumineszenten Verbindung (EL-Schicht) 3 der Fa. Lumitec AG (Schweiz) versehen. Die Kontaktierung erfolgte über Kontaktfahnen 6,6', die mit leitfähigen Klebern einerseits mit der Chrom-Schicht 2, andererseits mit der EL-Schicht 3 verbunden waren.

### Beispiel 2

Die transparente PC-Folie 1 (Makrofol®, Fa. Bayer AG, Deutschland) mit 250 µm Dicke wurde mittels plasmagestützter Volumenbeschichtung mit einer 50 nm dicken Chrom-Schicht 2 versehen. Auf die Chrom-Schicht 2 wurde eine 50 µm dicke Schicht aus einer transparenten PC-Folie aufgebracht. Auf die PC-Folie wurde partiell eine EL-Schicht 3 aufgetragen. Das so hergestellte metallisierte Kunststoff-Formteil läßt sich verformen, stanzen und hinterspritzen. Die Kontaktierung erfolgt direkt zu der EL-Schicht. Für die Kontaktierung werden beim Hinterspritzen des metallisierten Kunststoff-Formteils mit thermoplastischem Kunststoff Kanäle mit Hilfe von Auswerferstiften im Spritzgießwerkzeug in die Kunststoff-Schicht eingebracht. Federn am aufgeklebten Inverter sorgen für die Kontaktsicherung des Inverters am Kunststoff-Formteil.

## Patentansprüche

1. Metallisiertes Kunststoff-Formteil, welches wenigstens folgenden Schichtenaufbau aufweist:
- eine Schicht aus transparentem thermoplastischem Kunststoff (1) mit einer Dicke von 50 bis 3000 µm
- eine Schicht aus Metall (2) der Dicke 5 bis 250 nm, wobei das Metall aus der Gruppe bestehend aus Chrom, Titan, Molybdän, Aluminium, Kupfer, Gold, Indium und Iridium ausgewählt ist
- eine Schicht aus einer oder mehreren elektrolumineszenten Verbindungen (3)
- zwischen der Schicht aus Metall (2) und der Schicht aus einer oder mehreren elektrolumineszenten Verbindungen (3) zusätzlich wenigstens eine Schicht aus einem oder mehreren elektrisch leitenden Kunststoffen.

2. Metallisiertes Kunststoff-Formteil nach Anspruch 1, **dadurch gekennzeichnet, dass** die Schicht aus Metall (2) eine Dicke von 15 bis 60 nm aufweist.

3. Metallisiertes Kunststoff-Formteil nach einem der Ansprüche 1 bis 3, **dadurch gekennzeichnet, dass** die Schicht aus einem transparenten thermoplastischen Kunststoff (1) eine Dicke von 175 bis 750 µm aufweist.

## Claims

1. A metallised plastic moulded part that has at least the following layer structure:
- a layer of a transparent thermoplastic material (1) with a thickness of 50 to 3000 µm
- a layer of metal (2) with a thickness of 5 to 250 nm, wherein the metal is chosen from the group comprising chromium, titanium, molybdenum, aluminium, copper, gold, iridium and indium
- at least one layer of one or more electroluminescent compounds (3)
- between the layer of metal (2) and the layer of one or more electroluminescent compounds (3), in addition at least one layer of one or more electrically conductive plastic materials.

2. A metallised plastic moulded part according to Claim 1, **characterised in that** the layer of metal (2) has a thickness of 15 to 60 nm.

3. A metallised plastic moulded part according to one of Claims 1 to 2, **characterised in that** the layer of a transparent thermoplastic material (1) has a thickness of 175 to 750 µm.

## Revendications

1. Pièce moulée en résine synthétique métallisée comportant au moins l'ensemble de couches suivant :
- une couche d'une résine synthétique thermoplastique transparente (1) d'épaisseur 50 à 3 000 µm,
- une couche de métal (2) d'épaisseur 5 à 250 nm, le métal étant choisi dans le groupe consistant en le chrome, le titane, le molybdène, l'aluminium, le cuivre, l'or, l'indium et l'iridium,
- une couche d'un ou plusieurs composés électroluminescents (3),
- en outre, entre la couche de métal (2) et la couche consistant en un ou plusieurs composés électroluminescents (3) au moins une couche d'une ou plusieurs résines synthétiques conductrices de l'électricité.

2. Pièce moulée en résine synthétique métallisée selon la revendication 1, **caractérisée en ce que** la couche de métal (2) a une épaisseur de 15 à 60 nm.

3. Pièce moulée en résine synthétique métallisée selon une des revendications 1 à 3, **caractérisée en ce que** la couche de résine synthétique thermoplastique transparente (1) a une épaisseur de 175 à 750 µm.
